## Europäisches Patentamt
## European Patent Office
## Office européen des brevets

(11) Publication number: **0 173 773**
**B1**

# EUROPEAN PATENT SPECIFICATION

(45) Date of publication of patent specification: **17.05.89**

(21) Application number: **84304030.4**

(22) Date of filing: **14.06.84**

(51) Int. Cl.⁴: **B 60 R 22/06**

(54) **Automatic seat belt driving device.**

(43) Date of publication of application:
**12.03.86 Bulletin 86/11**

(45) Publication of the grant of the patent:
**17.05.89 Bulletin 89/20**

(84) Designated Contracting States:
**DE FR GB SE**

(56) References cited:
**DE-A-2 612 462**
**GB-A-2 087 219**

(73) Proprietor: **Nippon Seiko Kabushiki Kaisha**
**6-3, Ohsaki 1-chome Shinagawa-ku**
**Tokyo 141 (JP)**

(72) Inventor: **Yokote, Yoshihiro**
**40-2, Utsukushigaoka 3-chome Midori-ku**
**Yokohama-shi Kanagawa-ken (JP)**
Inventor: **Yamamoto, Kazuo**
**23-12, Sagamidai 7-chome**
**Sagamihara-shi Kanagawa-ken (JP)**

(74) Representative: **Wright, Peter David John et al**
**R.G.C. Jenkins & Co. 26 Caxton Street**
**London SW1H 0RJ (GB)**

Courier Press, Leamington Spa, England.

## Description

This invention relates to a driving device used in an automatic seat belt system to move the seat belt between a seat occupant restraining position and a seat occupant liberating position.

Driving devices are known for moving a seat belt between a seat occupant restraining position and a seat occupant liberating position. Such driving devices generally include a flexible drive member, one end of which is attached to a rotatable member. The other, free end of the drive member may be attached either directly to the seat belt or indirectly by way of a movable anchor or the like to which the seat belt is attached. Movement of the seat belt between the two positions is achieved by advancing the drive member by winding it out from the rotatable member, or by retracting the drive member by winding it into the rotatable member.

Such a device is disclosed in British Patent Specification GB-A-2,087,219. In this application a drive device comprises a rotatable sprocket wheel having a multiplicity of sprocket teeth that provide positive winding and unwinding of a flexible drive tape having holes that receive the sprocket teeth. The drive tape moves the seat belt guide between restraint and release positions and the guide in turn moves a seat belt between occupant-restraining and occupant-releasing positions.

However, in this driving device, the rotatable member is contained within a main body or frame member and the drive member extends from the frame member and out of the main body through an entrance and exit port formed in the main body. In the abovementioned device the port lies along a tangential line extending from the surface of the sprocket wheel onto which drive member is wound. Accordingly, the drive member, which is not restrained from expanding radially outwardly away from the sprocket wheel when it is being wound out from the sprocket wheel, tends to be pushed against the stationary inner wall surface of the frame member. Thus the drive member is not guided smoothly within the device as it is wound out from the rotatable member since a frictional action results when the drive member comes into contact with the inner wall surface of the frame member. Moreover, frictional action between the turns of the drive member wrapped around the drum tends to further increase the frictional resistance acting against the drive member as it is unwound from the rotatable member.

According to the present invention therefore there is provided a driving device for use in an automatic seat belt system for moving a seat belt between a seat occupant liberating position and a seat occupant restraining position, the device comprising an elongate flexible drive member one end portion of which is connectable to the seat belt for moving the same between said positions by virtue of the drive member being advanced or retracted, a rotatable member having a drive member storage portion with which the other end portion of the drive member is engaged for retracting the drive member by winding-in the drive member to the drive member storage portion and for advancing the drive member by winding-out the drive member from the drive member storage portion, and drive means for rotating the rotatable member selectively in two opposing directions for advancing and retracting the drive member, all as known from GB-A-2087219, the invention being characterized in that the drive member storage portion of the rotatable member comprises a recess formed in a side wall of said rotatable member, said side wall extending transversely to the rotational axis of said rotatable member, and said drive member extends from said recess through fixed guide means which is axially offset from said recess.

By virtue of the arrangement according to the invention, the disadvantageous effect obtained in the arrangement of GB-A-2087219 when the drive member is advanced by being wound out from the drum portion of the rotatable member, namely the tendency of the drive member to expand outwardly and frictionally engage the surrounding fixed wall surface thereby reducing the driving efficiency of the drive member, is turned to advantage in that, by arranging the drive member storage portion as a recess in a side wall of the rotatable member in accordance with the teachings of the present invention, any such outward expansion of the drive member merely causes the drive member to frictionally engage the radially outermost wall of the recess which increases the driving efficiency of the drive member by the rotatable member.

Further features of the present invention are set forth in the subordinate claims and the advantages thereof will become apparent to those possessed of the relevant skill from consideration of the following detailed description of exemplary embodiments which are shown in the accompanying drawings in which:

Figure 1 schematically shows the entirety of an example of the automatic seat belt device;

Figure 2 is a partly broken-away front view of a first embodiment of the present invention;

Figure 3 is a cross-sectional view taken along a line A—A of Figure 2;

Figure 4 is a cross-sectional view taken along a line B—B of Figure 2;

Figure 5 is a cross-sectional view taken along a line C—C of Figure 2;

Figure 6 illustrates a modification in which a roller is provided.

Figure 7 illustrates a modification in which a ring is provided.

Figure 8 illustrates a modification in which a trumpet-shaped guide groove is provided.

Figure 9 illustrates a modification in which a pressing member is provided.

Figure 10 illustrates a modification in which a movable guide member is provided.

Figure 11 illustrates the manner in which a drum member and a drive member are connected together.

Figure 12 illustrates the drive member having a central thick portion.

Figure 13 is a partly broken-away front view of a second embodiment of the present invention.

Figure 14 is a cross-sectional view taken along a line D—D of Figure 13.

Figure 15 illustrates a trumpet-shaped guide groove.

Figure 16 illustrates a modification in which a movable guide member is provided.

Figure 17 is a cross-sectional view taken along a line E—E of Figure 16.

Fig. 18 is a partly broken-away front view of a third embodiment of the present invention.

Figure 19 is a cross-sectional view taken along a line F—F of Figure 18.

Figure 20 is a partly broken-away front view of a fourth embodiment of the present invention.

Figure 21 is a side view of the fourth embodiment.

Some embodiments of the present invention will hereinafter be described by reference to the drawings.

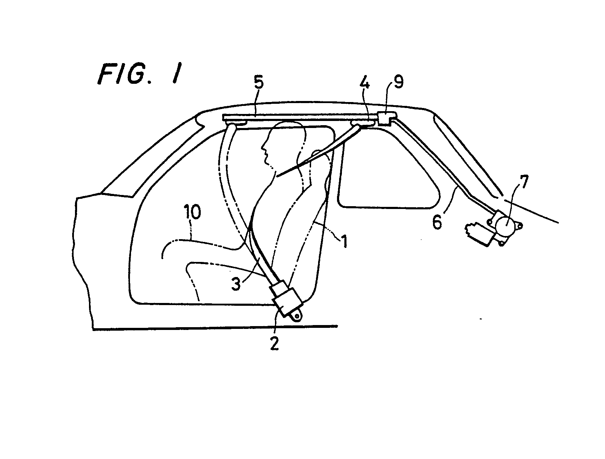

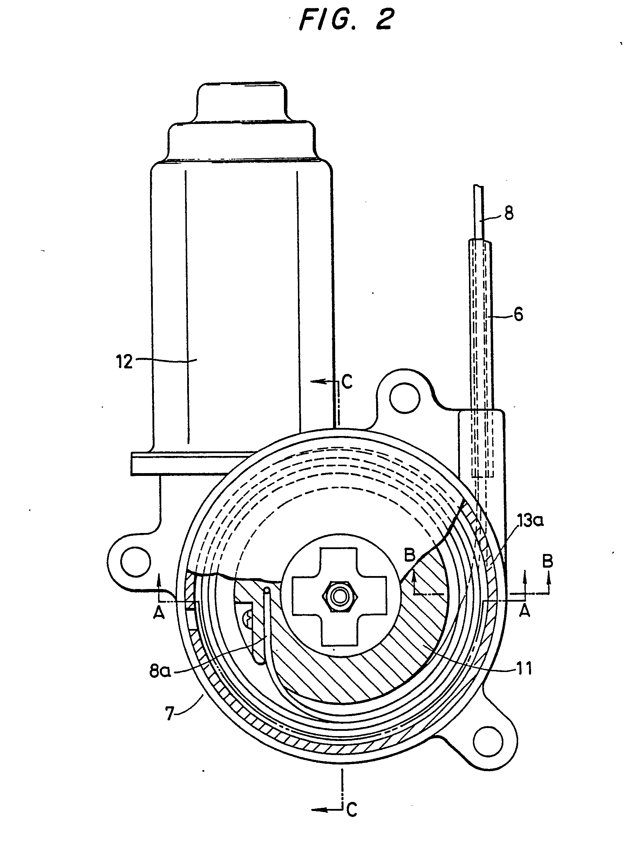

Figure 1 schematically shows the entirety of an automatic seat belt device in which an embodiment of the driving device according to the present invention is provided. A retractor 2 is attached to the inner side of a seat 1 and a belt 3 extends out from the retractor to a movable anchor 4. The movable anchor 4 is movable back and forth along a guide member 5 attached to the roof side on the outer side of the seat 1. The anchor 4 may be moved by a belt-like elastic drive member 8 (see Figure 2 and so on) extending in a tube 6 and taken up by a take-up device 7 and pushed out therefrom. When the drive member 8 is taken up by the take-up device 7 and the movable anchor 4 is moved rearwardly and assumes a position in which it is latched by a latch portion 9, the belt 3 restrains the seat occupant 10 as indicated by solid lines. When the drive member 8 is pushed out from the take-up device 7 and the movable anchor 4 is moved forwardly, the belt 3 liberates the seat occupant 10 as indicated by dots-and-dash lines and permits the seat occupant to get on and off the seat 1.

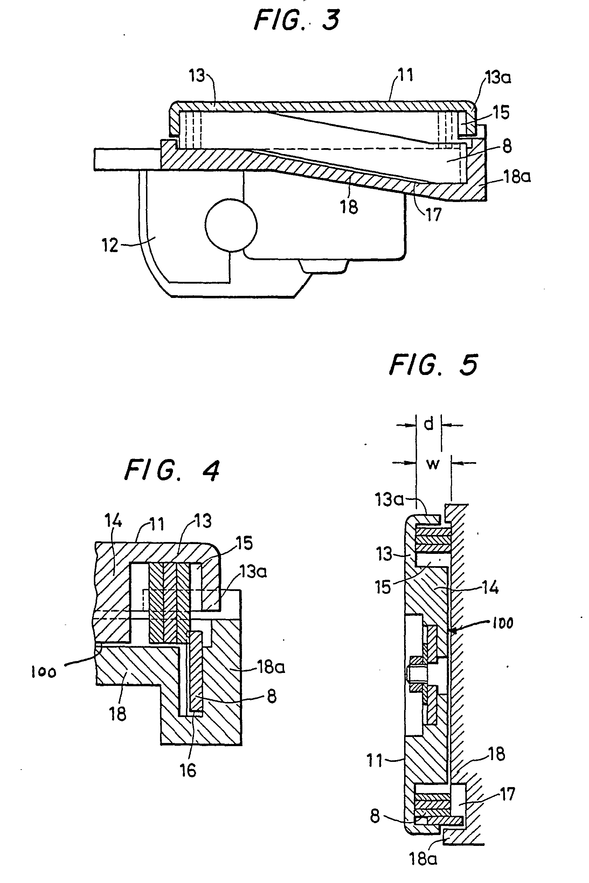

Referring to Figure 2 which shows the details of the take-up device 7, a drum member 11 to which one end 8a of the drive member 8 is attached may be rotated clockwise or counter-clockwise by a motor 12 through a gear train, now shown, and may take up or push out the drive member 8 in accordance with the direction of rotation. As shown in Figures 3 to 5 which are cross-sectional views taken along the line A—A, line B—B and line C—C, respectively, of Figure 2, the drum member 11 has an annular groove 15 provided in the side wall 100 thereof, the side wall 100 extending transversely to the rotational axis of the drum member 11, and this groove 15 defines a recess for containing therein the drive member 8 taken up around the drum portion 14 and within the cup-shaped portion 13 of the drum member 11. In opposed relationship with the annular groove 15, a fixed side member 18 formed with an entrance and exit 16 for directing the drive member 8 into the tube 6 and a guide portion 17 for guiding the drive member 8 from the annular groove 15 to the entrance and exit 16 is secured to the fixed side. The entrance and exit 16 is formed at a position deviated from the annular groove 15 in the direction of the rotational axis of the drum member 11. The amount of this deviation is related to the depth of the annular groove 15 and if this depth is equal to the width of the belt-like drive member 8, the entrance and exit 16 must be deviated by an amount corresponding to said width, but if the depth d is made smaller than the width w as shown in Figure 5, the entrance and exit 16 can correspondingly be formed toward the annular groove 15 and therefore, the amount of deviation can be reduced. Thus, the take-up device 7 becomes correspondingly smaller in size.

In the example illustrated, the guide portion 17 changes from an inclined surface to a flat surface in the vicinity of the entrance and exit 16 and becomes parallel to the rotational axis of the drum member 11 at the entrance and exit 16, but alternatively, the inclined surface may further extend and the entrance and exit 16 may be provided at an angle with respect to the rotational axis.

Operation of the present embodiment will now be described on the basis of the above-described construction.

When the seat occupant becomes seated on the seat 1 and closes the door, not shown, for example, a door switch, not shown, senses it and the motor 12 starts to revolve and the drum member 11 is rotated clockwise as viewed in Figure 2 and the drive member 8 begins to be taken up around the drum portion 14. At this time, the drive member 8 which has come in through the tube 6 and the entrance and exit 16 is directed to the level of the annular groove 15 by the guide portion 17 and is taken up. In this manner, the drive member 8 is taken up, whereby the movable anchor connected thereto is moved from the forward seat occupant liberating position rearwardly to the seat occupant restraining position. The movable anchor 4 arrives at the latch portion 9 and is latched there, whereupon a switch, not shown, is operated and the motor 12 is stopped. Thereby, the seat occupant 10 is restrained by the belt 3 shown by solid lines in Figure 1.

Next, when the seat occupant 10 opens the door, the door switch senses it as previously described and the motor 12 starts to revolve in the reverse direction and the drum member 11 begins to be rotated counter-clockwise as viewed in Figure 2. Thus, a push-out force acts on the drive member 8, whereby the drive member 8 in the outer peripheral portion is directed from the annular groove 15 to the entrance and exit 16 through the guide portion 17 and enters into the tube 6. At this time, the stationary outer peripheral wall 13a of the cup-shaped portion 13 of the drum member 11 is also rotated and therefore, even if the drive member 8 which tends to be inflated outwardly due to said push-out force comes into contact with the stationary outer peripheral wall 13a, it will further promote the push-out force and will not diminish it, and the drive member 8 comes into contact with the outer peripheral wall 18a of the fixed side member 18 at the guide portion 17 extending in the range of a center angle of the order of 90° and thus does not so much adversely affect the push-out force. Accordingly, the drive member 8 is smoothly pushed out by the push-out force provided by the drum member 11. The adverse effect of the outer peripheral wall 18a of the fixed side member 18 can be further reduced either by reducing the length of the guide portion 17 by reducing the amount of deviation of the entrance and exit 16 or by making such a design that the drive member 8 cannot come into contact with the outer peripheral wall 18a until the drive member 8 fully leaves the annular groove 15 as shown in Figure 5.

The movable anchor 4 is moved forwardly by the drive member 8 pushed out in this manner and, when the movable anchor 4 has arrived at the seat occupant liberating position, a switch, not shown, is operated to stop the motor 12. Thus, the seat occupant 10 can leave the seat 1 without being hindered by the belt 3.

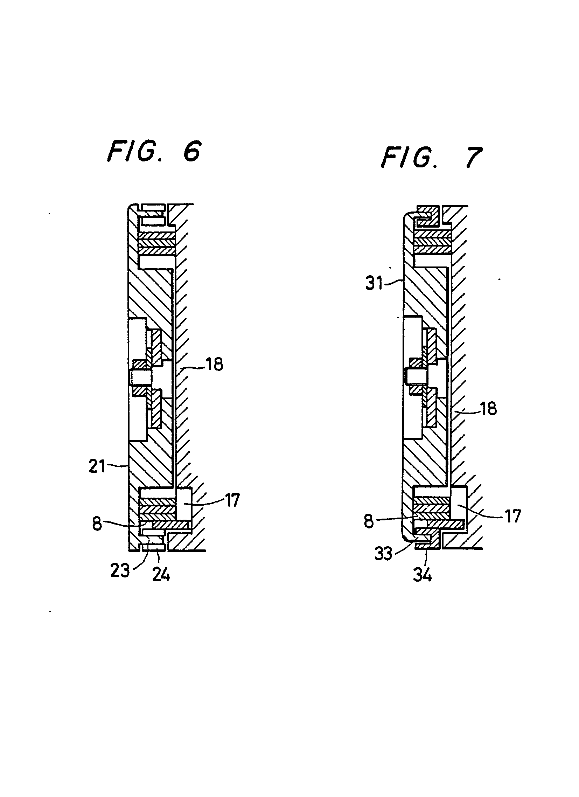

Figures 6 and 7 respectively show a modification in which, instead of the stationary outer peripheral wall 13a of the drum member 13, a roller 24 is rotatably disposed on a plurality of projections 23 of a drum member 21 and a modification in which a ring member 34 is rotatably mounted on the outer peripheral annular projection 33 of a drum member 31. By doing so, the drive member 8 can be more smoothly pushed out through the guide portion 17 without any resistance when it is to be pushed out.

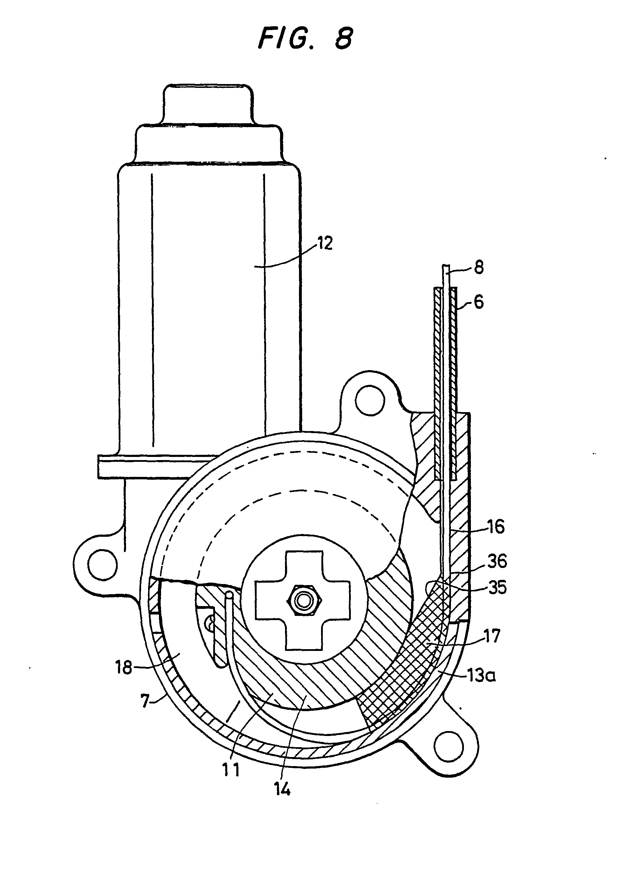

Figure 8 shows a modification in which the guide portion 17 of the fixed side member 18 is in the form of an inclined trumpet-shaped guide groove (shown by cross hatching) defined by an inner wall 35 formed along a tangential line drawn from the vicinity of the entrance and exit 16 to the drum portion 14 of the drum member 11 and an outer wall 36 also formed along a tangential line drawn to the outer peripheral wall 13a of the drum member 11.

Thus, both when the drive member 8 is pushed out and when the drive member 8 is taken up, the drive member 8 only contacts the fixed surfaces, i.e., the inner wall 35 and the outer wall 36 at a minimum limit and is guided along the inner wall 35 and the outer wall 36 while depicting a reasonable curve and therefore, the drive member 8 is pushed out and taken up more smoothly and with a less friction resistance force.

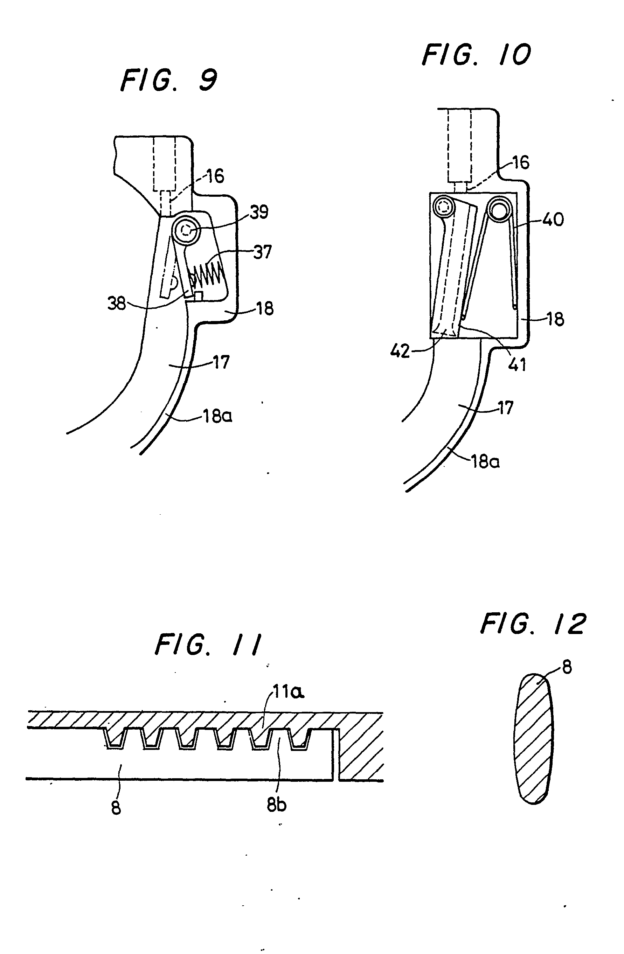

Figure 9 shows a modification in which a pressing member 38 inwardly biased by a spring 37 is provided near the entrance and exit 16 of the fixed side member 18. Since the pressing member 38 is biased inwardly, namely, clockwise, about a shaft portion 39, and is about to assume its dots-and-dash line position, it brings as much inwardly as possible the drive member 8 guided along the guide portion 17 and thereby prevents the drive member 8 from being subjected to the friction resistance caused by the contact thereof with the outer wall 18a of the fixed side member 18 and also prevents the drive member 8 from bending. Accordingly, the undesirable possibility of the drive member 8 stagnating in the vicinity of said outer wall 18a is eliminated and smoother push-out of the drive member 8 is realized.

Figure 10 shows a modification in which a movable guide member 41 inwardly biased by a spring 40 is provided near the entrance and exit 16 of the fixed side member 18.

This modification is substantially similar in operation and effect to the example of Figure 9 with the only exception that the drive member 8 is passed along the guide path 42 of the guide member 41.

Now, in the above-described embodiment, as shown in Figure 2, one end 8a of the drive member 8 is connected to the drum member 11 by a fastening member, but alternatively, as shown in Figure 11, the drum member 11 and the drive member 8 may be connected together by causing the concavo-convex portion 11a of the drum member 11 to mesh with the concavo-convex portion 8b of the drive member 8.

Also, as regards the drive member 8, the central portion of the width of the cross-section thereof as shown in Figure 12 may be made somewhat thick, whereby the area of contact thereof with the wall surface of the fixed side member 18 is further reduced and smoother push out of the drive member 8 becomes possible.

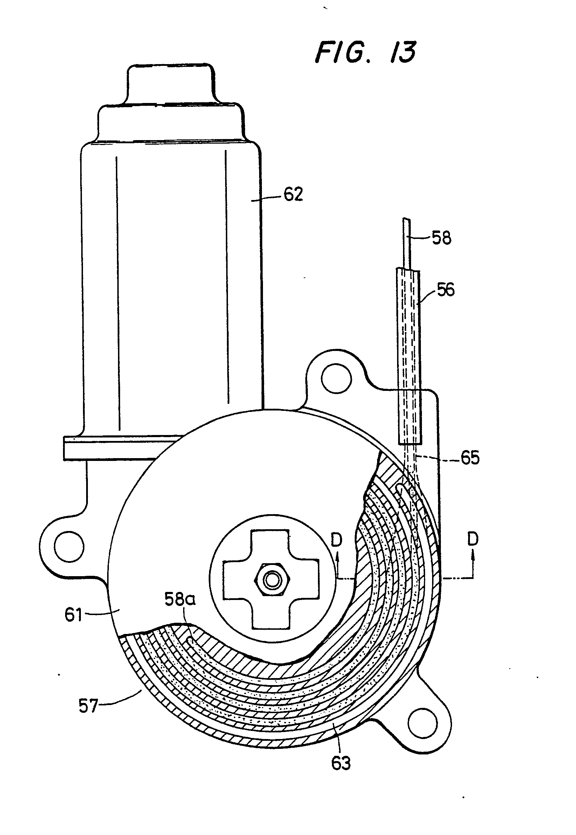

Referring to Figure 13 which shows a second embodiment, a rotatable member 61 to which one end 58a of a drive member 58 is attached may be rotated clockwise or counter-clockwise by a motor 62 through a gear train, not shown, and may correspondingly take up or push out the drive member 58. The rotatable member 61 is formed with a spiral groove 63 which takes up or pushes out the drive member 58 with order.

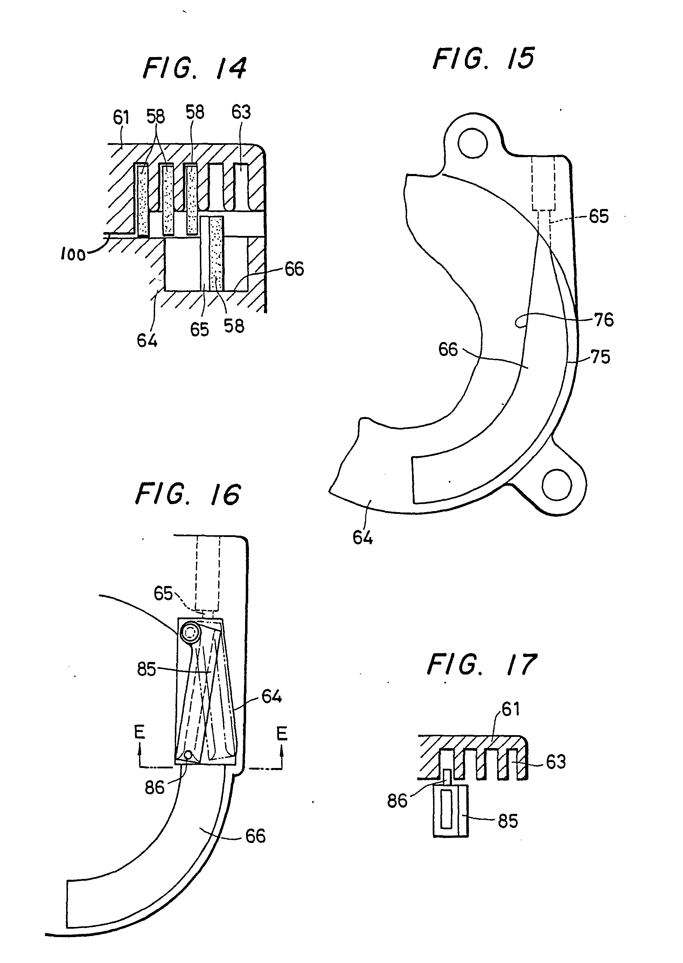

As shown in Figure 14 which is a cross-sectional view taken along line D—D of Figure 13, the spiral groove 63 opens downwardly and has a depth smaller than the width of the belt-like drive member 58. In an opposed relationship with the spiral groove 63, a fixed side member 64 is provided on the fixed side, and there are formed in the fixed side member an entrance and exit 65 for directing the drive member 58 into a tube 56 and a guide portion 66 forming an inclined surface for guiding the drive member 58 from the groove 63 to the entrance and exit 65. The entrance and exit 65 is formed at a position deviated from the groove 63 in the direction of the rotational axis of the rotatable member 61. The amount of this deviation is related to the depth of the groove 63 and, if this depth is equal to the width of the drive member 58, it will be necessary to deviate the entrance and exit 65 by an amount corresponding to said width, but if the depth of the groove 63 is smaller than said width as shown in Figure 14, the entrance and exit 65 may correspondingly be formed toward the groove 63. Correspondingly, the take-up device 57 will become smaller in size.

Next, as regards the guide portion 66 of the fixed side member 64, it is desirable for smooth take-up and draw-out of the drive member 58 that the guide portion 66 be formed in its relation with the entrance and exit 65 so that the drive member 58 is liberated from the restraint of the groove 63 near the point of contact of a tangential line extended from the entrance and exit 65 to each groove periphery of the spiral groove 63. As an example thereof, there is a guide portion 66 formed as a trumpet-shaped inclined groove as shown in Figure 15. This guide portion 66 is defined by wall surfaces 75 and 76 formed substantially along a tangential line extending from the entrance and exit 65 to the outermost periphery and the innermost periphery of the spiral groove 63.

Operation of the second embodiment will now be described on the basis of the above-described construction.

In Figure 1, when the seat occupant 10 sits down on the seat 1 and closes the door, not shown, for example, a door switch, not shown, senses it and the motor 62 starts to revolve and the rotatable member 61 is rotated clockwise as viewed in Figure 13 and begins to take up the drive member 58 into the spiral groove 63 with good order. At this time, the drive member 58 having come in through the tube 56 and the entrance and exit 65 is directed to each level of the spiral groove 63 by the guide portion 66 and smoothly taken up. By the drive member 58 being thus taken up, the movable anchor 4 (Figure 1) connected thereto is moved rearwardly from the forward seat occupant liberating position to the seat occupant restraining position. When the movable anchor 4 arrives at the latch portion 9 and is restrained thereat, a switch, not shown, operates and the motor 62 is stopped. Thus, the seat occupant 10 is restrained by the belt 3 shown by solid lines in Figure 1.

Next, in Figure 1, when the seat occupant 10 opens the door, the door switch senses it as previously described and the motor 62 starts to revolve in the reverse direction and the rotatable member 61 begins to rotate counter-clockwise as viewed in Figure 13. Thus, a push-out force acts on the drive member 58, and the portion of the drive member 58 which is in the groove on the outer periphery side of the spiral groove 63 passes through the guide portion 66 and is smoothly directed to the entrance and exit 65 and comes into the tube 56. At this time, a force which tends to inflate the drive member 58 outwardly acts on the drive member 58, but since this force is controlled by the spiral groove 63, the drive member 58 does not strongly contact the stationary wall surface of the fixed side member 64 and accordingly the push-out force is not diminished, but the drive member 58 is pushed smoothly and quickly.

The movable anchor 4 (Figure 1) is moved forwardly by the drive member 58 pushed out in this manner and, when the movable anchor has arrived at the seat occupant liberating position, a switch, not shown, operates to stop the motor 62. Thus, in Figure 1, the seat occupant can leave the seat 1 without being hindered by the belt 3.

Figure 16 and Figure 17 which is a cross-sectional view taken along the line E—E of Figure 16 show a modification having a movable guide member 85 provided so as to be movable in operative association with the roll diameter of the drive member 58, in more particular, to move inwardly in response to the decrease of the roll diameter of the drive member 58 in the spiral groove 63, said operative association being accomplished by causing the projection 86 of the guide member 85 to be engaged with the spiral groove 63 of the rotatable member 61. Thus, the drive member 58 may be pushed out more smoothly and without bending. Further, the play of the drive member 58 in the driving device is eliminated and movement of the movable anchor becomes smooth.

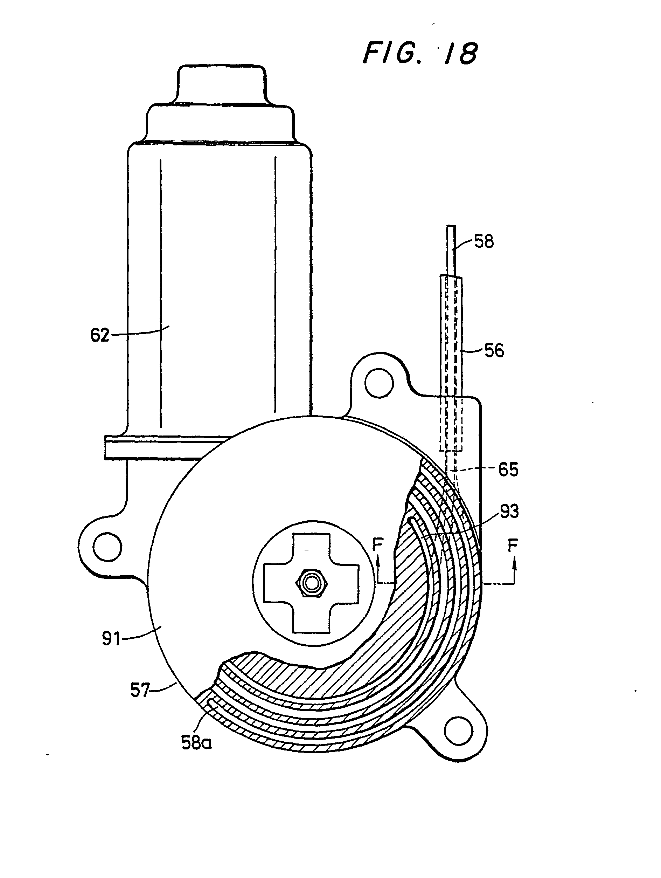

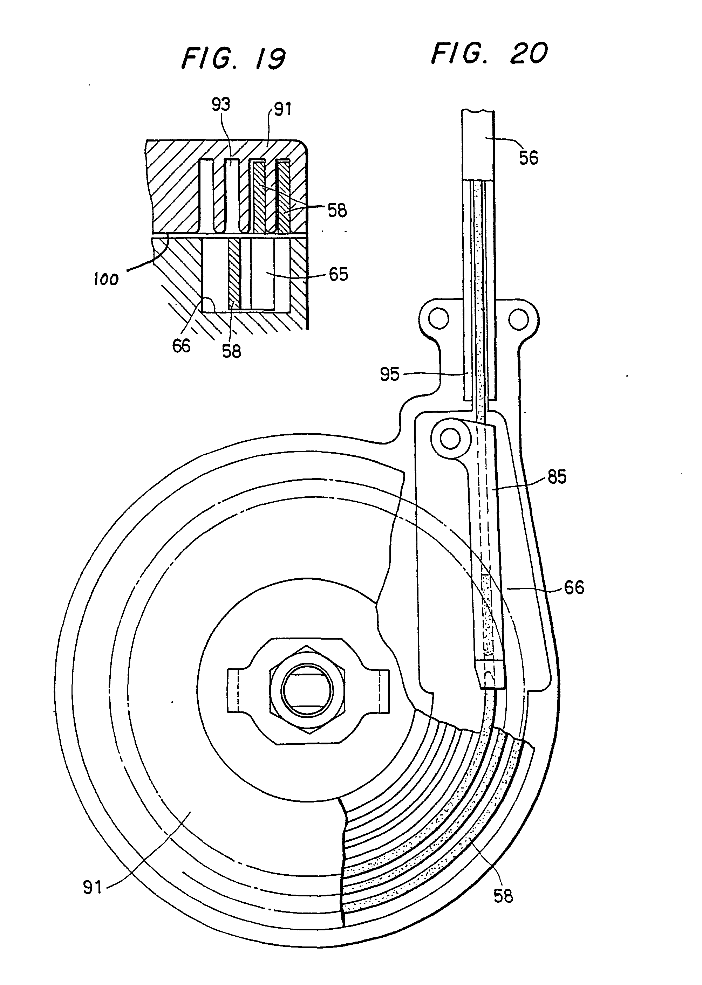

Description will now be made of a third embodiment in which one end 58a of the drive member 58 is attached to the outermost side of the spiral groove of the rotatable member. In this embodiment, as shown in Figure 18, the drive member 58 has its innermost portion directed to the entrance and exit 65 through the guide portion 66. Also, a spiral groove 93, as shown in Figure 19 which is a cross-sectional view taken along the line F—F of Figure 18, has a depth substantially equal to the width of the drive member 58. Operation of this embodiment is substantially the same as that of the second embodiment, but if in the arrangement shown in Figure 1 the driving device 57 is that of the third embodiment, a relatively small amount of the drive member 58 is taken up or pushed out for the same amount of rotation of the rotatable member 91 because, on the seat occupant restraining position side, the drive member 58 extends outwardly from the inner portion of the spiral groove 93 to the entrance and exit 65 and accordingly, movement of the movable anchor 4 (Figure 1) becomes slow on the side near the seat occupant, and this is preferable in safety.

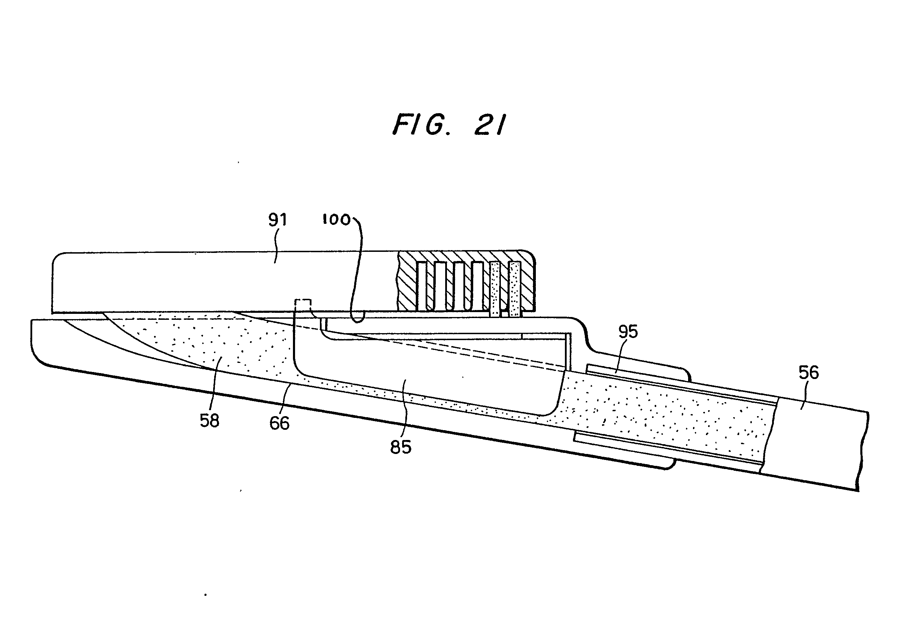

Now, in the above-described embodiments, the entrance and exit 65 is provided in parallelism to the rotational axis of the rotatable member, but alternatively, as in a fourth embodiment shown in Figures 20 and 21, the inclined surface of the guide portion 66 may extend as it is and the entrance and exit 95 may be provided at an angle with respect to the rotational axis of the rotatable member 91. Thus, the take-up or push-out of the drive member 58 becomes smoother. In the fourth embodiment, as in the third embodiment, one end of the drive member 58 is attached to the outermost side of the spiral groove and a movable guide member 85 as shown in Figure 16 is provided.

Although, in the above-described embodiments, use is made of a belt-like drive member, use may also be made of a rope-like drive member having a circular cross-section.

## Claims

1. A driving device for use in an automatic seat belt system for moving a seat belt (3) between a seat occupant liberating position and a seat occupant restraining position, the device comprising an elongate flexible drive member (8; 58) one end portion of which is connectable to the seat belt (3) for moving the same between said positions by virtue of the drive member (8; 58) being advanced or retracted, a rotatable member (11; 61; 91) having a drive member storage portion (14) with which the other end portion of the drive member (8; 58) is engaged for retracting the drive member (8; 58) by winding-in the drive member (8; 58) to the drive member storage portion (14) and for advancing the drive member (8; 58) by winding-out the drive member (8; 58) from the drive member storage portion (14), and drive means (12; 62) for rotating the rotatable member (11; 61; 91) selectively in two opposing directions for advancing and retracting the drive member (8; 58), characterized in that the drive member storage portion (14) of the rotatable member (11; 61; 91) comprises a recess (15; 63; 93) formed in a side wall (100) of said rotatable member (11; 61; 91), said side wall (100) extending transversely to the rotational axis of said rotatable member (11; 61; 91), and said drive member (8; 58) extends from said recess (15; 63; 93) through fixed guide means (17; 66) which is axially offset from said recess (15; 63; 93).

2. A driving device according to claim 1, wherein the side wall (100) of said rotatable member is opposed to a fixed side member (18) of the device which fixed side member (18) defines an entrance and exit port (16; 65) providing access to and from said drive member storage portion (14) by way of said fixed guide means (17; 66), said fixed guide means (17) furthermore being defined by said fixed side member (18).

3. A driving device according to claim 2, wherein said fixed guide means (17; 66) is defined by a substantially horn-shaped guide groove formed in said fixed side member (18) and including an inner wall (35; 76) which follows a path defined partially by a tangential line drawn from adjacent the port (16; 65) to the inner radial surface of the recess (15; 63; 93), and an outer wall (36; 75) which follows a path defined partially by a tangential line drawn from adjacent the port (16; 65) to the outer peripheral wall of the recess (15; 63; 93).

4. A driving device according to any of the preceding claims wherein said drive member (8) is engaged with said rotatable member by virtue of the drive member (8) and its accommodating recess (15; 63; 93) in the rotatable member being provided with interengaged formations (8b; 11a) for positively engaging the drive member with the recess.

5. A driving device according to any of the preceding claims, wherein said recess is defined by an annular groove (15) formed in said sidewall (100) of said rotatable member (11).

6. A driving device according to claim 5 wherein said drive member (8) is arranged to be guided between said port (16) and said annular groove (15) by means of an inwardly biased member (38; 41).

7. A driving device according to claim 5 or 6, wherein the outermost wall of said groove (15) includes a plurality of friction-reducing roller means (24; 34) arranged to contact the adjacent surface of the flexible drive member (8).

8. A driving device according to any of claims 1 to 4, wherein said recess is defined by a spiral groove (63; 93) formed in said side wall (100) of said rotatable member (61; 91).

9. A driving device according to claim 8, wherein said drive member (8) is arranged to be guided between said port (16) and said spiral groove (63; 93) by means of a movable guide member (85) which is adapted to move inwardly and outwardly so as to guide the drive member (8) between the respective turns of said spiral groove (63; 93) and the port (16).

10. A driving device according to claim 9 wherein said movable guide member (85) has a portion (86) which is engaged with said spiral groove (63; 93) so that the disposition of the guide member (85) changes as the rotatable member (61; 91) rotates.

11. A driving device according to any of the preceding claims, wherein said drive member (8; 58) is a belt-like member and the depth (d) of said recess (15; 63; 93) is smaller than the width (w) of said belt-like member (8; 58).

12. A driving device according to claim 11 wherein said belt-like member has a cross-sectional shape whereof the thickness of the central portion is greater than that of the adjacent side edge portions thereof.

13. A driving device according to any of claims 1 to 10, wherein said drive member (8) is a rope-like member having a circular cross-section.

14. A driving device according to any of claims 1 to 10, wherein said drive member (8) has an oblong cross-section.

## Patentansprüche

1. Antriebseinrichtung zur Verwendung in einem automatischen Sicherheitsgurtsystem zum Bewegen eines Sicherheitsgurts (3) zwischen einer die den Sitz einnehmende Person befreienden Position und einer die den Sitz einnehmende Person festhaltenden Position, enthaltend ein langgestrecktes, flexibles Antriebselement (8; 58), von dem ein Endabschnitt mit dem Sicherheitsgurt (3) verbindbar ist, um diesen zwischen den genannten Positionen dadurch zu bewegen, daß das Antriebselement (8; 58) vor- oder zurückbewegt wird, ein drehbares Element (11; 61; 91), das einen Speicherelementaufnahmeabschnitt (14) aufweist, mit dem der andere Endabschnitt des Antriebselements (8; 58) verbunden ist, um das Antriebselement (8; 58) durch Aufwickeln des Antriebselements (8; 58) in den Antriebselementaufnahmeabschnitt (14) aufzuwickeln und um das Antriebselement (8; 58) durch Auswickeln des Antriebselements (8; 58) aus dem Antriebselementaufnahmeabschnitt (14) vorzubewegen, und eine Antriebseinrichtung (12; 62) zum Drehen des drehbaren Elements (11; 61; 91) wahlweise in zwei entgegengesetzten Richtungen zum Vorbewegen oder Zurückziehen des Antriebselements (8; 58), dadurch gekennzeichnet, daß der Antriebselementaufnahmeabschnitt (14) des drehbaren Elements (11; 61; 91) eine Ausnehmung (15; 63; 93) aufweist, die in einer Seitenwand (100) des drehbaren Elements (11; 61; 91) ausgebildet ist, welche Seitenwand (100) sich quer zur Drehachse des drehbaren Elements (11; 61; 91) erstreckt, und das Antriebselement (8; 58) sich von der Vertiefung (15; 63; 93) durch eine feste Führungseinrichtung (17; 66) erstreckt, die axial gegenüber der Ausnehmung (15; 63; 93) versetzt ist.

2. Antriebseinrichtung nach Anspruch 1, bei der die Seitenwand (100) des drehbaren Elements einem festen Seitenelement (18) der Einrichtung gegenübersteht, welches feste Seitenelement (18) eine Eintritts- und Austrittsöffnung (16; 65) definiert, die Zugang zu und aus dem Antriebselementaufnahmeabschnitt (14) mittels der festen Führungseinrichtung (17; 66) gewährt, welche feste Führungseinrichtung (17) weiterhin durch das feste Seitenelement (18) definiert ist.

3. Antriebseinrichtung nach Anspruch 2, bei der die feste Führungseinrichtung (17; 66) durch eine im wesentlichen hornförmige Führungsrille definiert ist, die in dem festen Seitenelement (18) ausgebildet ist und eine innere Wand (35; 76), die einem Weg folgt, der teilweise durch eine tangentiale Linie, die aus der Nachbarschaft der Öffnung (16; 65) zu der inneren radialen Oberfläche der Ausnehmung (15; 63; 93) gezogen ist, definiert ist, und eine äußere Wand (36; 75) enthält, die einem Weg folgt, der teilweise durch eine tangentiale Linie, die aus der Nachbarschaft der Öffnung (16; 65) zur äußeren Umfangswand der Ausnehmung (15; 63; 93) gezogen ist, definiert ist.

4. Antriebseinrichtung nach einem der vorhergehenden Ansprüche, bei der das Antriebselement (8) mit dem drehbaren Element derart verbunden ist, daß das Antriebselement (8) und die sie aufnehmende Ausnehmung (15; 63; 93) in dem drehbaren Element mit miteinander in Eingriff stehenden Formationen (8b; 11a) versehen sind, um das Antriebselement mit der Ausnehmung formschlüssig zu verbinden.

5. Antriebseinrichtung nach einem der vorhergehenden Ansprüche, bei der die Ausnehmung durch eine ringförmige Rille (15) definiert ist, die in der Seitenwand (100) des drehbaren Elements (11) ausgebildet ist.

6. Antriebseinrichtung nach Anspruch 5, bei der das Antriebselement (8) so eingerichtet ist, daß es zwischen der Öffnung (16) und der ringförmigen Rille (15) mittels eines nach innen vorgespannten Elements (38; 41) geführt ist.

7. Antriebseinrichtung nach Anspruch 5 oder 6, bei der die äußerste Wand der Rille (15) mehrere reibungsmindernde Rollelemente (24; 34) aufweist, die so angeordnet sind, daß sie die benachbarte Oberfläche des flexiblen Antriebselements (8) berühren.

8. Antriebseinrichtung nach einem der Ansprüche 1 bis 4, bei der die Ausnehmung duch eine spiralförmige Rille (63; 93) definiert ist, die in der Seitenwand (100) des drehbaren Elements (61; 91) ausgebildet ist.

9. Antriebseinrichtung nach Anspruch 8, bei der das Antriebselement (8) so angeordnet ist, daß es zwischen der Öffnung (16) und der spiralförmigen Rille (63; 93) mittels eines beweglichen Führungselementes (85) geführt ist, das dazu eingerichtet ist, sich nach innen und außen zu bewegen, um das Antriebselement (8) zwischen den jeweiligen Windungen der spiralförmigen Rille (63; 93) und der Öffnung (16) zu führen.

10. Antriebseinrichtung nach Anspruch 9, bei der das bewegliche Führungselement (85) einen Abschnitt (86) aufweist, der mit der spiralförmigen Rille (63; 93) derart in Eingriff ist, daß die Lage des Führungselementes (85) sich ändert, wenn das drehbare Element (61; 91) rotiert.

11. Antriebseinrichtung nach einem der vorhergehenden Ansprüche, bei der das Antriebselement (8; 58) ein gurtartiges Element ist und die Tiefe (d) der Ausnehmung (15; 63; 93) kleiner als die Breite (w) des gurtartigen Elements (8; 58) ist.

12. Antriebseinrichtung nach Anspruch 11, bei der das gurtartige Element eine Querschnittsgestalt aufweist, deren Dicke im mittleren Abschnitt größer als in den benachbarten Seitenrandabschnitten desselben ist.

13. Antriebseinrichtung nach einem der Ansprüche 1 bis 10, bei der das Antriebselement (8) ein seilartiges Element mit einem kreisförmigen Querschnitt ist.

14. Antriebseinrichtung nach einem der Ansprüche 1 bis 10, bei der das Antriebselement (8) einen länglichen Querschnitt aufweist.

**Revendications**

1. Appareil d'entraînement destiné à être utilisé dans une ceinture automatique de sécurité de siège pour le déplacement d'une sangle (3) de ceinture entre une position de libération et une position de retenue d'un occupant du siège, l'appareil comprenant un organe souple et allongé d'entraînement (8; 58) dont une première partie d'extrémité est destinée à être connectée à la sangle (3) afin que celle-ci soit déplacée entre ses différentes positions par l'organe d'entraînement (8; 58) qui avance et recule, un organe rotatif (11; 61; 91) qui a une partie (14) d'emmagasinage d'organe d'entraînement avec laquelle coopère l'autre partie d'extrémité de l'organe d'entraînement (8; 58) de manière que cet organe d'entraînement (8; 58) recule par enroulement de l'organe d'entraînement (8; 58) sur la partie d'emmagasinage (14), et afin que l'organe d'entraînement (8; 58) avance par déroulement de l'organe d'entraînement (8; 58) de la partie d'emmagasinage (14), et un élément d'entraînement (12; 62) destiné à faire tourner l'organe rotatif (11; 61; 91) sélectivement dans deux sens opposés afin que l'organe d'entraînement (8; 58) avance et recule, caractérisé en ce que la partie d'emmagasinage (14) d'organe d'entraînement de l'organe rotatif (11; 61; 91) comporte une cavité (15; 63; 93) formée dans une paroi latérale (100) de l'organe rotatif (11; 61; 91), la paroi latérale (100) étant disposée transversalement à l'axe de rotation de l'organe rotatif (11; 61; 91), et l'organe d'entraînement (8; 58) part de la cavité (15; 63; 93) et passe dans un dispositif fixe de guidage (17; 66) qui est décalé axialement par rapport à la cavité (15; 63; 93).

2. Appareil d'entraînement selon la revendication 1, dans lequel la paroi latérale (100) de l'organe rotatif est disposée en face d'un organe latéral fixe (18) de l'appareil, cet organe latéral fixe (18) délimitant un orifice d'entrée et de sortie (16; 65) donnant accès à la partie d'emmagasinage (14) de l'organe d'entraînement par l'intermédiaire du dispositif fixe de guidage (17; 66), le dispositif fixe de guidage (17) étant en outre délimité par l'organe latéral fixe (18).

3. Appareil d'entraînement selon la revendication 2, dans lequel le dispositif fixe de guidage (17; 66) est délimité par une gorge de guidage ayant pratiquement une forme de cornet, réalisée dans l'organe latéral fixe (18) et comprenant une paroi interne (35; 76) qui suit un trajet délimité partiellement par une droite tangente allant d'un emplacement adjacent à l'orifice (16; 65) à la surface radiale interne de la cavité (15; 63; 93), et une paroi externe (36; 75) qui suit un trajet délimité partiellement par une droite tangente partant d'un point adjacent à l'orifice (16; 65) et dirigée vers la paroi périphérique externe de la cavité (15; 63; 93).

4. Appareil d'entraînement selon l'une quelconque des revendications précédentes, dans lequel l'organe d'entraînement (8) coopère avec l'organe rotatif parce que l'organe d'entraînement (8) et sa cavité de logement (15; 63; 93) formée dans l'organe rotatif ont des éléments d'imbrication (8b; 11a) destinés à assurer la coopération positive de l'organe d'entraînement et de la cavité.

5. Appareil d'entraînement selon l'une quelconque des revendications précédentes, dans lequel la cavité est délimitée par une gorge annulaire (15) formée dans la paroi latérale (100) de l'organe rotatif (11).

6. Appareil d'entraînement selon la revendication 5, dans lequel l'organe d'entraînement (8) est destiné à être guidé entre l'orifice (16) et la gorge annulaire (15) par un organe (38; 41) qui est rappelé vers l'intérieur.

7. Appareil d'entraînement selon la revendication 5 ou 6, dans lequel la paroi externe de la gorge (15) a plusieurs galets (24; 34) destinés à réduire le frottement et à être au contact de la surface adjacente de l'organe souple d'entraînement (8).

8. Appareil d'entraînement selon l'une quelconque des revendications 1 à 4, dans lequel la cavité est délimitée par une gorge spiralée (63; 93) formée dans la paroi latérale (100) de l'organe rotatif (61; 91).

9. Appareil d'entraînement selon la revendication 8, dans lequel l'organe d'entraînement (8) est disposé afin qu'il soit guidé entre ledit orifice (16) et la gorge spiralée (63; 93) par un organe mobile de guidage (85) qui est destiné à se déplacer vers l'intérieur et vers l'extérieur afin que l'organe d'entraînement (8) soit guidé entre les spires respectives de la gorge spiralée (63; 93) et l'orifice (16).

10. Appareil d'entraînement selon la revendication 9, dans lequel l'organe mobile de guidage (85) a une partie (86) qui coopère avec la gorge spiralée (63; 93) afin que la disposition de l'organe de guidage (85) change lorsque l'organe rotatif (61; 91) tourne.

11. Appareil d'entraînement selon l'une quelconque des revendications précédentes, dans lequel l'organe d'entraînement (8; 58) est un organe analogue à une courroie et la profondeur (d) de la cavité (15; 63; 93) est inférieure à la largeur (w) de l'organe analogue à une courroie (8; 58).

12. Appareil d'entraînement selon la revendication 11, dans lequel l'organe analogue à une courroie a, en coupe, une configuration telle que l'épaisseur de la partie centrale est supérieure à celle des parties latérales adjacentes.

13. Appareil d'entraînement selon l'une quelconque des revendications 1 à 10, dans lequel l'organe d'entraînement (8) est un organe analogue à une corde de section circulaire.

14. Appareil d'entraînement selon l'une quelconque des revendications 1 à 10, dans lequel l'organe d'entraînement (8) a une section oblongue.

FIG. 1

# FIG. 2

## FIG. 3

## FIG. 4

## FIG. 5

# FIG. 6

# FIG. 7

# FIG. 8

FIG. 9

FIG. 10

FIG. 11

FIG. 12

FIG. 13

FIG. 14

FIG. 15

FIG. 16

FIG. 17

FIG. 18

FIG. 19

FIG. 20

# FIG. 21